# EUROPÄISCHE PATENTSCHRIFT

(11) **EP 2 230 143 B1**
(45) Veröffentlichungstag und Bekanntmachung des Hinweises auf die Patenterteilung: **08.05.2019**
(21) Anmeldenummer: 10155969.8
(22) Anmeldetag: 09.03.2010
(51) Int. Cl.: B60T 13/36, B60T 8/18

(54) **Ventileinrichtung mit Knickventilfunktion für Lastbremsventile**
Valve device with fold valve function for load controlled brake valves
Dispositif de soupape doté d'une fonction de limitation de pression pour valve relais dépendant de la charge

(30) Priorität: 13.03.2009 DE 102009013004
(43) Veröffentlichungstag der Anmeldung: 22.09.2010
(73) Patentinhaber: KNORR-BREMSE Systeme für Schienenfahrzeuge GmbH, 80809 München (DE)
(72) Erfinder: König, André, 13595 Berlin (DE)
(74) Vertreter: Schönmann, Kurt

(56) Entgegenhaltungen:
- EP-B1- 0 734 926
- WO-A1-79/00123
- DE-A1- 2 640 993
- DE-A1- 10 003 136
- DE-B3-102006 025 329
- US-A- 3 510 172
- US-A- 5 005 915

## Beschreibung

Die Erfindung betrifft eine Ventileinrichtung mit Knickventilfunktion für Lastbremsventile von Druckluftbremsen von Schienenfahrzeugen nach dem Oberbegriff des Anspruchs 1.

Für Güterzüge mit pneumatischen Bremseinrichtungen sind im so genannten SS-Verkehr (Geschwindigkeiten bis 120 km/h) bei automatischer Lastabbremsung so genannte Knickventile als Zusatzeinrichtungen vorschriftsgemäß (UIC541-04) vorgesehen.

Derartige Ventileinrichtungen mit Knickventilfunktion sind für Lastbremsventile von Druckluftbremsen bei Schienenfahrzeugen eingebaut, um es zu ermöglichen, dass bei einer Zusammenstellung von Güterzügen mit Güterwagen mit üblicher und höherer Abbremsung eine Bremsdruckcharakteristik von Fahrzeugen mit hoher Abbremsung in dem Bereich, der lang anhaltenden Bremsungen entspricht, an die solcher Fahrzeuge mit einer üblichen Charakteristik angeglichen wird. Somit wird der Nachteil, der sich daraus ergibt, dass die Wagons mit höherer Abbremsung einen Energieanteil, welcher größer als der Gewichtsanteil dieser Fahrzeuge ist, beim Bremsen umwandeln und wobei sie zum Teil die Abbremsung benachbarter Wagons mit übernehmen, nicht mehr auftritt. Weiterhin steht die hohe Abbremsung derart bereit, dass auch der Bremsweg der schnell fahrenden Fahrzeuge eingehalten werden kann.

Die EP 0 734 926 B1 beschreibt eine derartige gattungsgemäße Ventileinrichtung mit Knickventilfunktion.

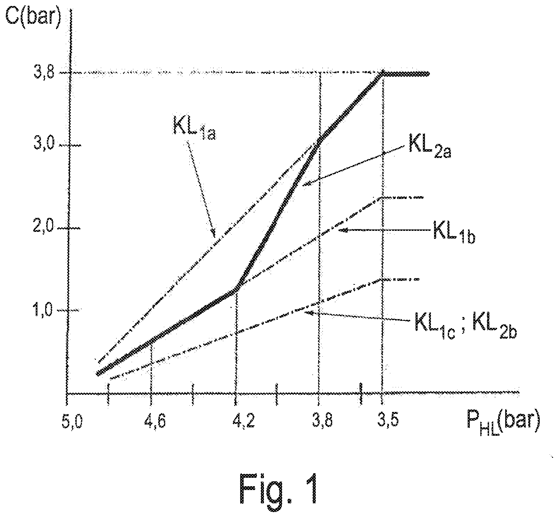

Funktion und Zulassungsbedingungen sind in dem Dokument UIC541-04 beschrieben. Dazu zeigt Fig. 1 eine Knickfunktion für automatische Lastabbremsung mit verschiedenen Bremskennlinien, wobei ein Bremsdruck C (weiter unten auch als Ausgangsdruck C bezeichnet) über einem Hauptleitungsdruck P_{HL} aufgetragen ist. Dabei repräsentiert eine Kennlinie KL₁ₐ einen Verlauf für eine Radsatzlast von 18t ohne Knickfunktion, eine Kennlinie KL_{1b} 14,5t Radsatzlast ohne Knickfunktion und eine Kennlinie KL_{1c} und KL_{1d} 10t Radsatzlast, ebenfalls ohne Knickfunktion. Der Verlauf dieser Kennlinien (strichpunktiert dargestellt) ist hier von hohen Hauptleitungsdrücken bis zu einem Wert von 3,5 bar jeweils linear mit unterschiedlicher Steigung ansteigend. Eine Kennlinie KL₂ₐ zeigt einen Knickfunktionsverlauf für eine Radsatzlast von 18 t. Von hohen Hauptleitungsdrücken ausgehend verläuft Kennlinie KL₂ₐ bis zu einem Hauptleitungsdruck von 4,2 bar deckungsgleich mit der KL_{1b}, weist dann im Bereich von diesem Hauptleitungsdruck von 4,2 bar bis 3,8 bar eine höhere Steigung auf, den so genannten Knick, nähert sich dabei der Kennlinie KL₁ₐ stetig und verläuft mit ihr ab dem Hauptleitungsdruck 3,8 bar deckungsgleich weiter.

Gemäß der oben genannten Vorschrift UIC541-04 gewährt für die Kennlinie KL₂ₐ im Bereich geringerer Bremsungen gegenüber Kennlinie KL_{1b} eine Toleranz von +0,1/-0,2 bar.

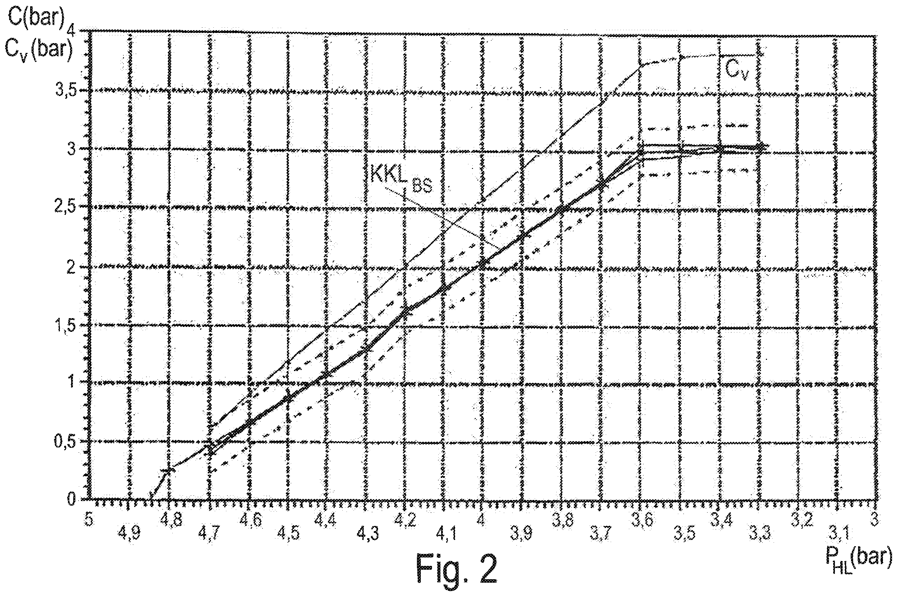

Wenn ein Fahrzeug mit einer solchen Bremseinrichtung mit einem Lastbremsventil mit Knickfunktion für den S-Verkehr (Geschwindigkeiten bis 100 km/h) bei maximaler Beladung verwendet wird, beeinflusst das Knickventil den Verlauf der Kennlinie auch im S-Verkehr, wie in Fig. 2 illustriert ist. Hierbei ist eine Knickkennlinie KKL_{BS} im S-Verkehr bei maximaler Beladung dargestellt, welche im Bereich von Hauptleitungsdrücken 4,3 bis 4,1 bar bedingt durch die oben erwähnte, zulässige Toleranz einen nicht linearen Verlauf aufweist. Im Gegensatz dazu weist eine entsprechende Kennlinie KL_{BS} im S-Verkehr ohne Knickfunktion bei maximaler Beladung einen linearen Verlauf in dem Bereich von 4,3 bis 4,1 bar wie in allen Bereichen von hohen Drücken an bis zu einem Hauptleitungsdruck von etwa 3,7 bar auf.

Die Aufgabe der vorliegenden Erfindung besteht daher darin, eine Ventileinrichtung mit Knickventilfunktion für Lastbremsventile bereitzustellen, welche sowohl für SS- und S-Verkehr geeignet ist und im S-Verkehr einen linearen Verlauf bei maximaler Beladung aufweist.

Die Aufgabe wird durch eine Ventileinrichtung mit Knickventilfunktion für Lastbremsventile mit den Merkmalen des Anspruchs 1 gelöst. Die Aufgabe wird ferner durch ein Lastbremsventil mit den Merkmalen des Anspruchs 5 gelöst.

Demgemäß ist eine Ventileinrichtung mit Knickventilfunktion für Lastbremsventile von Druckluftbremsen von Schienenfahrzeugen, mit einem Einlassventil und einem Auslassventil für den Einlass und/oder Auslass von Druckluft zur Bildung eines Ausgangsdrucks, der sich von einem Eingangsdruck durch eine geknickte Charakteristik unterscheidet, wobei das Einlassventil und das Auslassventil wechselweise und in entgegengesetzter Richtung öffnen oder in einer Abschlussstellung beide geschlossen sind; und einem Druckteilungskolben und einem Nachbremskolben zur Betätigung des Einlassventils und des Auslassventils; wobei der Druckteilungskolben in Öffnungsrichtung des Einlassventils vom Eingangsdruck und auf einer gegenüberliegenden größeren Fläche vom Ausgangsdruck belastet ist, und wobei sich der Nachbremskolben in Öffnungsrichtung des Einlassventils auf dem Druckteilungskolben abstützt und in diese Richtung vom Eingangsdruck, und auf einer gegenüberliegenden Kolbenfläche von einer vorgegebenen, begrenzten Druck- oder Federkraft belastet ist, dadurch gekennzeichnet, dass die Ventileinrichtung eine Umstelleinrichtung zur Umstellung der Knickventilfunktion aus einem eingeschalteten Zustand in einen ausgeschalteten Zustand und umgekehrt aufweist. Die Umstelleinrichtung ist zur Umstellung der Knickventilfunktion für eine direkte oder/und indirekte Betätigung des Einlassventils ausgebildet.

Damit ist eine Knickventilkombination für S- und SS-Verkehr geschaffen, wobei es mittels einer Umstelleinrichtung möglich ist, die Knickfunktion der Ventileinrichtung aus- und/oder einzuschalten. Ein solcher Umstellvorgang kann bei der Zusammenstellung von entsprechenden Zügen manuell oder auch automatisch in einfacher Weise vorgenommen werden.

Es ist somit möglich, einen Wagen mit einer Ventileinrichtung mit herkömmlicher Knickventilfunktion für den SS-Verkehr sowohl in diesem SS-Verkehr als auch im S-Verkehr einzusetzen. Das Knickventil muss nicht ausgetauscht werden, sondern kann eingebaut bleiben.

Dabei kann die Umstelleinrichtung im ausgeschalteten Zustand der Knickventilfunktion eine geöffnete Stellung des Einlassventils bewirken, wobei im eingeschalteten Zustand der Knickventilfunktion die ursprüngliche Betätigbarkeit des Einlassventils beibehalten werden kann.

Es ist vorgesehen, dass die Umstelleinrichtung im ausgeschalteten Zustand der Knickventilfunktion zur Aufhebung der auf den Nachbremskolben vorgegebenen, begrenzten Druck- oder Federkraft ausgebildet ist.

Dies kann dadurch erfolgen, dass die Umstelleinrichtung im ausgeschalteten Zustand der Knickventilfunktion einen Vorgabedruckraum, welcher mit der begrenzten Druck- oder Federkraft beaufschlagbar ist, mit der Umgebung verbindet.

Dazu kann die Umstelleinrichtung in einem ersten Ausführungsbeispiel in einer Leitung zu dem Vorgabedruckraum angeordnet sein, wobei sie im ausgeschalteten Zustand der Knickfunktion den Vorgabedruckraum mit der Umgebung verbindet und eine Zuleitung eines Vorgabedrucks sperrt. Im eingeschalteten Zustand der Knickfunktion stellt die Umstelleinrichtung die Verbindung des Vorgabedruckraums mit dem Vorgabedruck her. Dies kann zum Beispiel so ausgeführt sein, dass die Umstelleinrichtung ein umstellbares Ventil ist, welches in einer Zuleitung des Vorgabedruckraums angeordnet ist und in einer Stellung diese Zuleitung verbindet, wobei sie in der anderen Stellung den Zuleitungsabschnitt mit dem Vorgabedruck sperrt und den Zuleitungsabschnitt, der mit dem Vorgabedruckraum kommuniziert, mit der Umgebung verbindet.

In einem zweiten Ausführungsbeispiel kann die Umstelleinrichtung im ausgeschalteten Zustand der Knickventilfunktion eine Vorgabedruckeinheit, welche einen Vorgabedruck für den Vorgabedruckraum, in welchem der Nachbremskolben bewegbar ist, erzeugt, mit der Umgebung verbinden und einen Eingangsdruck für die Vorgabedruckeinheit sperren. Dadurch wird der Vorgabedruckraum mit dem Umgebungsdruck beaufschlagt, wodurch das Einlassventil öffnet. Im eingeschalteten Zustand der Knickfunktion kann die Umstelleinrichtung die Vorgabedruckeinheit dann mit dem Eingangsdruck verbinden, so dass ein festgelegter Vorgabedruck für den Vorgabedruckraum durch die Vorgabedruckeinheit erzeugt wird.

Ein Lastbremsventil von Druckluftbremsen von Schienenfahrzeugen mit einer Ventileinrichtung mit Knickventilfunktion weist die oben beschriebene Umstelleinrichtung auf.

Die Erfindung wird nun anhand von beispielhaften Ausführungen mit Bezug auf die beigefügten Zeichnungen näher erläutert. Hierbei zeigen:
- Fig. 1: eine grafische Darstellung von Kennlinien für unterschiedliche Bremsungen und eine Knickkennlinie;
- Fig. 2: eine grafische Darstellung einer Knickkennlinie im S-Verkehr bei maximaler Beladung;
- Fig. 3: eine grafische Darstellung einer Kennlinie ohne Knickfunktion im S-Verkehr bei maximaler Beladung;
- Fig. 4: eine schematische Schnittansicht eines ersten Ausführungsbeispiels einer erfindungsgemäßen Ventileinrichtung in einem eingeschalteten Zustand einer Knickfunktion;
- Fig. 5: das Ausführungsbeispiel nach Fig. 4 in einem ausgeschalteten Zustand der Knickfunktion;
- Fig. 6: eine schematische Schnittansicht eines zweiten Ausführungsbeispiels der erfindungsgemäßen Ventileinrichtung in einem eingeschalteten Zustand der Knickfunktion; und
- Fig. 7: das zweite Ausführungsbeispiel nach Fig. 6 in einem ausgeschalteten Zustand der Knickfunktion.

Bauteile bzw. -elemente, welche gleiche oder ähnliche Funktionen aufweisen, sind in den Figuren mit gleichen Bezugszeichen versehen.

Fig. 1, 2 und 3 sind bereits oben beschrieben und werden hier nicht weiter erläutert.

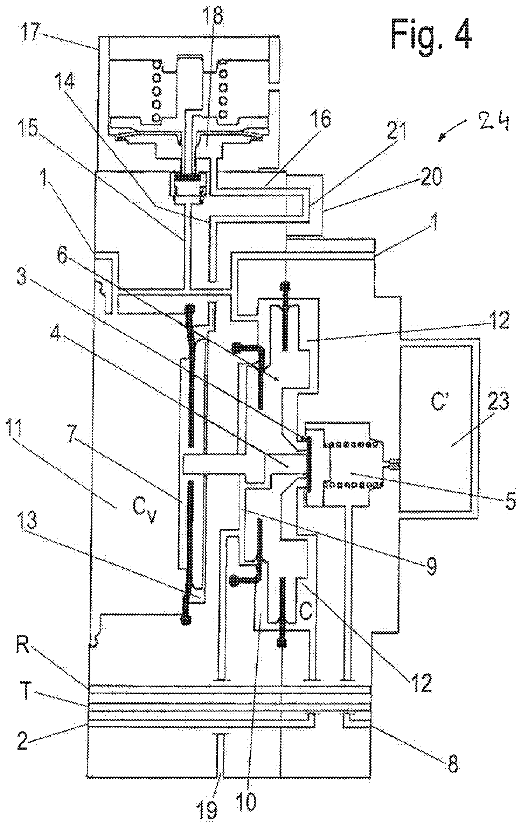

Fig. 4 zeigt eine schematische Schnittansicht eines Ausführungsbeispiels einer erfindungsgemäßen Ventileinrichtung 24 in einem eingeschalteten Zustand einer Knickfunktion.

Die Ventileinrichtung ist mit einem Einlass Eingangsdruck 1 an einen Eingangsdruck anschließbar und mit einem Auslass Ausgangsdruck 2 an einen Bremszylinder (nicht dargestellt) verbindbar. Ein Einlassventil 3 und ein Auslassventil 4 weisen gegenläufige Öffnungsrichtungen auf, wobei nur eines dieser Ventile 3 und 4 geöffnet sein kann. Es können aber auch beide in einer stabilen Abschlussstellung geschlossen sein. Eine Druckfeder in einem Speisedruckraum 5 erzeugt eine Vorspannung, mit welcher die Stabilität der Abschlussstellung erzielt wird und auch vorher festlegbar ist. Der Speisedruckraum 5 ist mit einem Speisedruckeinlass 8 und einer Speisedruckkammer 23 für einen Speisedruck C' verbunden.

Die Ventileinrichtung umfasst folgende Räume und Verbindungen:
- Einen Ablassraum 9, welcher mit einer Umgebung 19, zum Beispiel der Umgebungsatmosphäre, verbunden ist.
- Einen ersten Eingangssteuerraum 10 und einen zweiten Eingangssteuerraum 11, welche mit dem Eingangsdruck aus dem Einlass 1 verbunden sind.
- Einen Ausgangssteuerraum 12, welcher einen Ausgangsdruck führt und mit dem Auslass Ausgangsdruck 2 (zum Beispiel zu einem Bremszylinder) verbunden ist.
- Einen Vorgabedruckraum 13, welcher mit einem begrenzten Druck vorgegebener Größe verbunden ist und/oder Druckfedern enthalten kann.

Die Ventile 3 und 4 sind durch einen Druckteilungskolben 6 und einen Nachbremskolben 7 betätigbar. Der Druckteilungskolben 6 ist in Öffnungsrichtung des Einlassventils 3 mit dem Eingangsdruck im ersten Eingangssteuerraum 10 beaufschlagt, wobei der Druckteilungskolben 6 in Öffnungsrichtung des Auslassventils 4 mit dem Ausgangsdruck C im Ausgangssteuerraum 12 beaufschlagt ist. Dabei ist die durch den Ausgangsdruck C beaufschlagte Kolbenfläche größer als die ihr entgegen wirkende mit dem Eingangsdruck beaufschlagte.

Der Nachbremskolben 7 stützt sich in Öffnungsrichtung des Einlassventils 3 auf dem Druckteilungskolben 6 ab und ist in dieser Richtung vom Eingangsdruck im zweiten Eingangssteuerraum 11 beaufschlagt und in Öffnungsrichtung des Auslassventils 4 von einer vorgegebenen Druck- oder Federkraft im Vorgabedruckraum 13. Der Vorgabedruckraum 13 ist in diesem Beispiel über eine Vorgabedruckraumleitung 14 und eine sich daran anschließende Vorgabedruckleitung 16 mit einer Vorgabedruckkammer 18 einer Vorgabedruckeinheit 17 verbunden. Die Vorgabedruckeinheit 17 wird über eine Vorgabedruckzuleitung 15 gespeist, welche mit dem Einlass Eingangsdruck 1 kommuniziert.

Zwischen der Vorgabedruckraumleitung 14 und der Vorgabedruckleitung 16 ist eine Umstelleinheit 20 angeordnet, welche in der hier gezeigten Stellung die Vorgabedruckraumleitung 14 und die Vorgabedruckleitung 16 über eine Verbindungsleitung verbindet. Damit wird der Vorgabedruckraum 13 mit einem von der Vorgabeeinheit 17 erzeugten bzw. einstellbaren Vorgabedruck Cvs beaufschlagt. In dieser Stellung der Umstelleinheit 20 ist eine Knickventilfunktion der Ventileinrichtung in einem eingeschalteten Zustand, d.h. aktiviert.

Die Wirkungsweise der Ventileinrichtung wird nun erläutert.

Zu Beginn einer Bremsung trifft der Eingangsdruck als Steuerdruck Cv im zweiten Eingangssteuerraum 11 auf den Nachbremskolben 7 und im ersten Eingangssteuerraum 10 auf den Druckteilungskolben 6. Am Nachbremskolben 7 ergibt sich solange keine Wirkung, wie die entstehende Druckkraft die ihr entgegengerichtete vorgegebene Druck- oder Federkraft im Vorgabedruckraum 13 nicht übersteigt. Am Druckteilungskolben 6 löst die Druckkraft des Eingangsdrucks die Öffnung des Einlassventils 3 aus, bis durch die entgegengerichtete Wirkung des dadurch entstehenden Ausgangsdrucks C im Ausgangssteuerraum 12 ein Kräftegleichgewicht vorliegt und die Abschlussstellung der Ventile 3 und 4 eingenommen wird. Das hierbei entstandene Verhältnis der Drücke Cv und C entspricht dem Verhältnis der Flächen (solange der am Speisedruckeinlass 8 anliegende Speisedruck C' ausreichend hoch ist) und stellt die gewollte Verminderung des Bremsdrucks im Bereich lang anhaltender Bremsungen dar, wie oben bereits beschrieben ist. Bei weiterer Verstärkung der Bremsung, d.h. bei Erhöhung des Eingangs-/Steuerdrucks Cv bzw. Senkung des Hauptleitungsdrucks P_{HL}, überwindet der Nachbremskolben 7 die vorgegebene Gegenkraft im Vorgabedruckraum 13 dergestalt, dass sich das Verhältnis von Ausgangsdruck C zu Eingangsdruck Cv erhöht. Das Maximum ist durch die Höhe des Speisedrucks C' bestimmt.

Der Vorgabedruckraum 13 ist in diesem Zustand über die Verbindungsleitung 21 mit dem Vorgabedruck Cvs der Vorgabedruckeinheit 17 beaufschlagt.

Beim Lösen der Bremsung vermindert sich zunächst der Eingangsdruck und somit der Steuerdruck Cv, so dass durch den Überschuss der Kraft des Ausgangsdrucks C im Ausgangssteuerraum 12 auf den Druckteilungskolben 6 das Auslassventil 4 öffnet. Dabei vermindert sich der Ausgangsdruck C, weil Druckluft in den mit der Umgebung 19 verbundenen Ablassraum 9 strömt. Bei fortschreitendem Lösevorgang wird so die geknickte Kennlinie (siehe Fig. 1) des Ausgangsdrucks C in umgekehrter Richtung durchlaufen.

In dieser Stellung der Umstelleinrichtung 20 ist ein SS-Verkehr mit herkömmlicher Knickventilfunktion mit der Ventileinrichtung möglich.

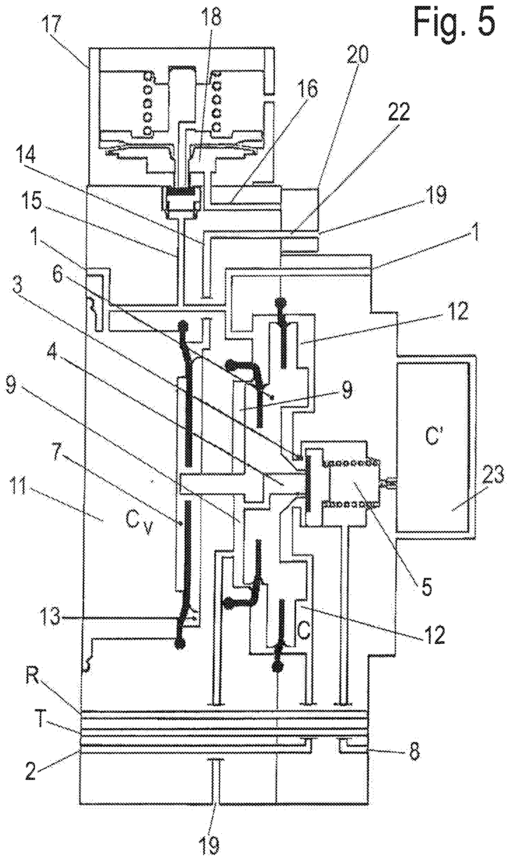

Fig. 5 zeigt das Ausführungsbeispiel nach Fig. 4 in einem ausgeschalteten Zustand der Knickfunktion.

Zur Ausschaltung der Knickventilfunktion ist die Umstelleinrichtung 20 so verstellt, dass die in Fig. 4 dargestellte Verbindungsleitung 21 die Vorgabedruckleitung 16 nicht mehr mit der Vorgabedruckraumleitung 14 verbindet. Die Verbindungsleitung 21 kann zum Beispiel mit einem Umstelleinrichtungskörper verdreht oder verschoben sein. Die Umstelleinrichtung 20 sperrt die Vorgabedruckleitung 16 ab und verbindet die Vorgabedruckraumleitung 16 über eine Auslassleitung 22 mit der Umgebung 19. Damit ist der Vorgabedruckraum 13 nicht mehr mit dem Vorgabedruck Cvs der Vorgabedruckeinheit 17 sondern mit dem Umgebungsdruck der Umgebung 19 beaufschlagt.

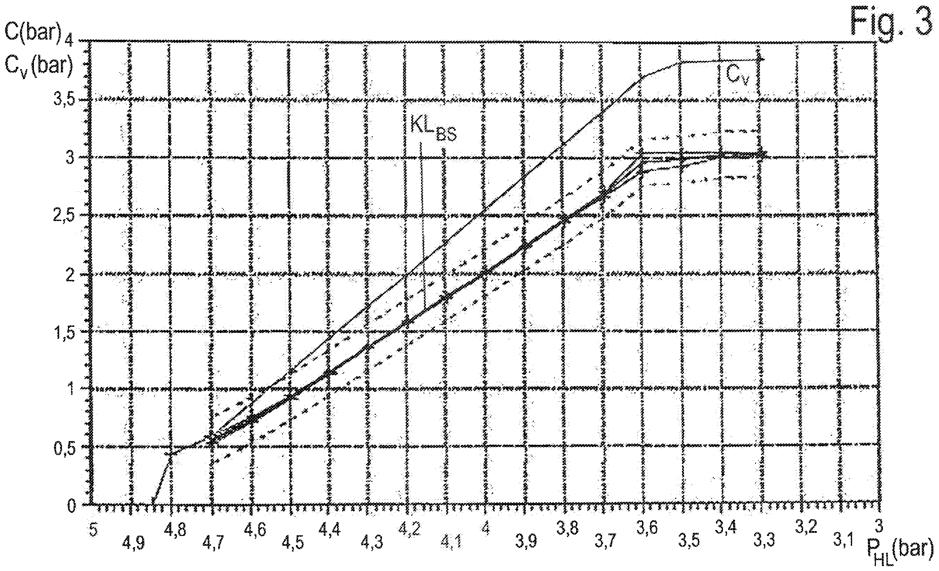

Dies hat zur Folge, dass der Vorgabedruckraum 13 entlüftet ist, wobei der Nachbremskolben 7 durch den Steuerdruck Cv im ersten Eingangssteuerraum 11 bei einer Bremsung sofort gegen den Druckteilungskolben 6 gedrückt wird, welcher dabei das Einlassventil 3 öffnet. Das Einlassventil 3 steht somit in jeder Brems- und Lösestellung offen, weshalb der die Ventileinrichtung speisende Speisedruck C' aus dem Lastbremsventil unbeeinflusst als Ausgangsdruck C zum Bremszylinder (nicht gezeigt) gelangt. Hiermit wird eine Kennlinie für den S-Verkehr wie als Kennlinie KL_{BS} in Fig. 3 illustriert als eine lineare Kennlinie ermöglicht, obwohl die Ventileinrichtung mit der in diesem Zustand ausgeschalteten Knickventilfunktion als Knickventil montiert bleiben kann.

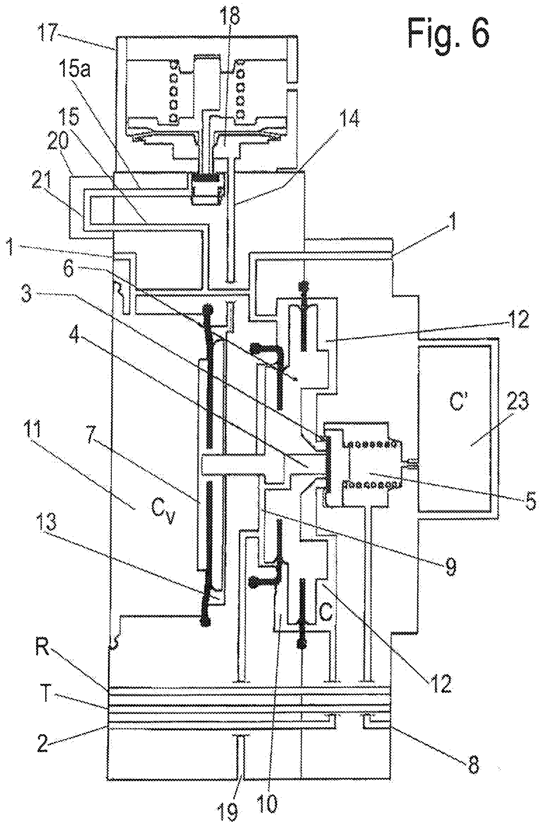

Ein zweites Ausführungsbeispiel der erfindungsgemäßen Ventileinrichtung in einem eingeschalteten Zustand der Knickfunktion illustriert Fig. 6 in einer schematischer Schnittansicht.

Im Gegensatz zum ersten Ausführungsbeispiel nach Fig. 4 ist in diesem Beispiel die Umstelleinrichtung 20 in der Vorgabedruckzuleitung 15 angeordnet, wobei der Vorgabedruckraum 13 über die Vorgabedruckraumleitung 14 direkt mit der Vorgabedruckeinheit 17 in Verbindung steht. Die Vorgabedruckzuleitung 15 kommuniziert über die Verbindungsleitung 21 der Umstelleinrichtung 20 mit einer Vorgabedruckzwischenleitung 15a, welche in die Vorgabedruckeinheit 17 mündet. In dieser hier gezeigten eingeschalteten Knickventilfunktion der Ventileinrichtung wird der Vorgabedruckraum 13 mit dem von der Vorgabeeinheit 17 erzeugten bzw. einstellbaren Vorgabedruck Cvs beaufschlagt.

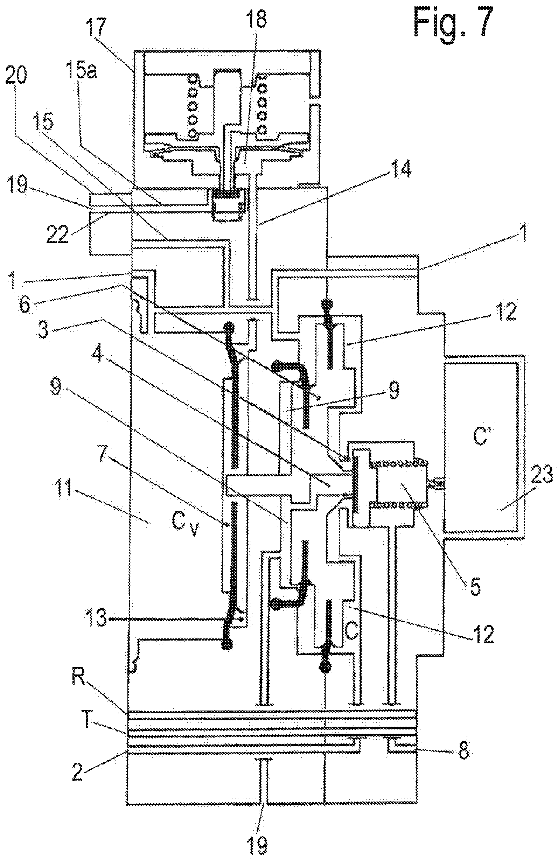

Fig. 7 zeigt schließlich das zweite Ausführungsbeispiel nach Fig. 6 in einem ausgeschalteten Zustand der Knickfunktion. Die Vorgabedruckzuleitung 15 ist durch die Umstelleinrichtung 20 verschlossen, wohingegen die Umstelleinrichtung 20 mit ihrer Auslassleitung 22 die Vorgabedruckzwischenleitung 15a mit der Umgebung 19 verbindet. Über die Vorgabedruckzwischenleitung 15a, die Vorgabedruckeinheit 17 und die Vorgabedruckraumleitung 14 ist der Vorgabedruckraum 13 nun mit der Umgebung 19 verbunden und wird entlüftet. Hierdurch wird das Einlassventil 3 geöffnet, wie schon oben beschrieben.

Die Erfindung ist nicht auf die oben beschriebenen Ausführungsbeispiele beschränkt. Sie ist im Rahmen der beigefügten Ansprüche modifizierbar.

So kann zum Beispiel im Falle einer vorgegebenen Federkraft anstelle des Vorgabedrucks Cvs diese Federkraft durch die Umstelleinrichtung 20 zur Ausschaltung der Knickfunktion aufgehoben werden, indem zum Beispiel die Feder blockiert wird. Dies kann beispielsweise in dem Fall, dass sowohl ein Vorgabedruck Cvs als auch eine Federkraft vorgesehen ist, dadurch erfolgen, indem zusätzlich zur Verbindung des Vorgabedruckraums 13 mit der Umgebung 19 eine mechanische und/oder pneumatische Verbindung zu dieser Feder diese gleichzeitig durch Blockierung wirkungslos macht.

Es ist auch denkbar, dass das Einlassventil 3 direkt durch die Umstelleinrichtung 20 beeinflussbar ist, indem es durch sie geöffnet wird. Dabei kann zum Beispiel ebenfalls eine mechanische Verbindung zum Einlassventil 3 vorgesehen sein, welche eine Wirkung auf dieses ausübt, wenn die Knickfunktion ausgeschaltet ist.

Eine Umstellung der Umstelleinrichtung 20 kann in einfacher Weise zum Beispiel manuell mittels Hebel erfolgen. Aber auch eine ferngesteuerte Umstellung, beispielsweise pneumatisch, mechanisch, elektrisch/elektronisch ist denkbar.

### Bezugszeichenliste

- 1: Einlass Eingangsdruck
- 2: Auslass Ausgangsdruck
- 3: Einlassventil
- 4: Auslassventil
- 5: Speisedruckraum
- 6: Druckteilungskolben
- 7: Nachbremskolben
- 8: Speisedruckeinlass
- 9: Ablassraum
- 10: Erster Eingangssteuerraum
- 11: Zweiter Eingangssteuerraum
- 12: Ausgangssteuerraum
- 13: Vorgabedruckraum
- 14: Vorgabedruckraumleitung
- 15: Vorgabedruckzuleitung
- 15a: Vorgabedruckzwischenleitung
- 16: Vorgabedruckleitung
- 17: Vorgabedruckeinheit
- 18: Vorgabedruckkammer
- 19: Umgebung
- 20: Umstelleinrichtung
- 21: Verbindungsleitung
- 22: Auslassleitung
- 23: Speisedruckkammer ,
- 24: Ventileinrichtung
- C: Ausgangsdruck
- Cv: Steuerdruck
- Cvs: Vorgabedruck
- C': Speisedruck
- KL: Kennlinie
- KL_{BS}: Kennlinie bei S-Verkehr
- KKL_{BS}: Knickkennlinie bei S-Verkehr
- P_{HL}: Druck Hauptleitung

## Patentansprüche

1. Ventileinrichtung (24) mit Knickventilfunktion für Lastbremsventile von Druckluftbremsen von Schienenfahrzeugen, mit:
einem Einlassventil (3) und einem Auslassventil (4) für den Einlass und/oder Auslass von Druckluft zur Bildung eines Ausgangsdrucks (C), der sich von einem Eingangsdruck durch eine geknickte Charakteristik unterscheidet, wobei das Einlassventil (3) und das Auslassventil (4) wechselweise und in entgegengesetzte Richtung öffnen oder in einer Abschlussstellung beide geschlossen sind; und
einem Druckteilungskolben (6) und einem Nachbremskolben (7) zur Betätigung des Einlassventils (3) und des Auslassventils (4);
wobei der Druckteilungskolben (6) in Öffnungsrichtung des Einlassventils (3) vom Eingangsdruck und auf einer gegenüberliegenden größeren Fläche vom Ausgangsdruck (C) belastet ist, und
wobei sich der Nachbremskolben (7) in Öffnungsrichtung des Einlassventils (3) auf dem Druckteilungskolben (6) abstützt und in diese Richtung vom Eingangsdruck, und auf einer gegenüberliegenden Kolbenfläche von einer vorgegebenen, begrenzten Druck- oder Federkraft belastet ist,
wobei die Ventileinrichtung (24) eine Umstelleinrichtung (20) zur Umstellung der Knickventilfunktion aus einem eingeschalteten Zustand in einen ausgeschalteten Zustand und umgekehrt aufweist,
**dadurch gekennzeichnet, dass**
die Umstelleinrichtung (20) zur Umstellung der Knickventilfunktion für eine direkte oder/und indirekte Betätigung des Einlassventils (3) ausgebildet ist.

2. Ventileinrichtung (24) nach Anspruch 1, **dadurch gekennzeichnet, dass** die Umstelleinrichtung (20) im ausgeschalteten Zustand der Knickventilfunktion eine geöffnete Stellung des Einlassventils (3) bewirkt und im eingeschalteten Zustand der Knickventilfunktion die ursprüngliche Betätigbarkeit des Einlassventils (3) beibehält.

3. Ventileinrichtung (24) nach Anspruch 2, **dadurch gekennzeichnet, dass** die Umstelleinrichtung (20) im ausgeschalteten Zustand der Knickventilfunktion zur Aufhebung der auf den Nachbremskolben (7) vorgegebenen, begrenzten Druck- oder Federkraft ausgebildet ist.

4. Ventileinrichtung (24) nach Anspruch 3, **dadurch gekennzeichnet, dass** die Umstelleinrichtung (20) im ausgeschalteten Zustand der Knickventilfunktion einen Vorgabedruckraum (13), in welchem der Nachbremskolben (7) bewegbar ist, mit der Umgebung (19) verbindet und einen Vorgabedruck des Vorgabedruckraums (13) sperrt, und dass die Umstelleinrichtung (20) im eingeschalteten Zustand der Knickfunktion den Vorgabedruckraum (13) mit dem Vorgabedruck verbindet.

5. Ventileinrichtung (24) nach Anspruch 4, **dadurch gekennzeichnet, dass** die Umstelleinrichtung (20) im ausgeschalteten Zustand der Knickventilfunktion eine Vorgabedruckeinheit (17), welche einen Vorgabedruck (Cvs) für den Vorgabedruckraum (13), in welchem der Nachbremskolben (7) bewegbar ist, erzeugt, mit der Umgebung (19) verbindet und einen Eingangsdruck (Cv) für die Vorgabedruckeinheit (17) sperrt, und dass die Umstelleinrichtung (20) im eingeschalteten Zustand der Knickfunktion die Vorgabedruckeinheit (17) mit dem Eingangsdruck (Cv) verbindet.

6. Lastbremsventil von Druckluftbremsen von Schienenfahrzeugen mit einer Ventileinrichtung (24) mit Knickventilfunktion nach einem der vorhergehenden Ansprüche.

## Claims

1. A valve device (24) with fold valve function for load-controlled brake valves of compressed-air brakes of rail vehicles having:
an inlet valve (3) and an outlet valve (4) for the admission and/or discharge of compressed air to form an output pressure (C), which differs from an input pressure by a folded characteristic, the inlet valve (3) and the outlet valve (4) opening alternately in opposite directions or both being closed in an end position; and
a pressure dividing piston (6) and a follow-up braking piston (7) for actuating the inlet valve (3) and the outlet valve (4);
the pressure dividing piston (6) being subject to the input pressure in the opening direction of the inlet valve (3) and to the output pressure (C) on an opposite, larger surface, and
the follow-up braking piston (7) being supported in the opening direction of the inlet valve (3) on the pressure dividing piston (6) and being subject in this direction to the input pressure and on an opposite piston surface to a pre-set, limited compression or spring force,
the valve device (24) having a switching device (20) for switching the fold valve function from a switched-on state to a switched-off state and back again,
**characterised in that**
the switching device (20) is designed to switch the fold valve function for direct and/or indirect actuation of the inlet valve (3).

2. A valve device (24) according to claim 1, **characterised in that** the switching device (20) brings about an open position of the inlet valve (3) when the fold valve function is switched off and maintains the original actuatability of the inlet valve (3) when the fold valve function is switched on.

3. A valve device (24) according to claim 2, **characterised in that** the switching device (20) is designed to remove the pre-set, limited compression or spring force on the follow-up braking piston (7) when the fold valve function is switched off.

4. A valve device (24) according to claim 3, **characterised in that** when the fold valve function is switched off the switching device (20) connects a pre-set pressure chamber (13), in which the follow-up braking piston (7) is able to move, to the environment (19) and blocks a pre-set pressure of the pre-set pressure chamber (13) and that when the fold valve function is switched on the switching device (20) connects the pre-set pressure chamber (13) to the pre-set pressure.

5. A valve device (24) according to claim 4, **characterised in that** when the fold valve function is switched off the switching device (20) connects a pre-set pressure unit (17), which generates a pre-set pressure (Cvs) for the pre-set pressure chamber (13) in which the follow-up braking piston (7) is able to move, to the environment (19) and blocks an input pressure (Cv) for the pre-set pressure unit (17) and that when the fold valve function is switched on the switching device (20) connects the pre-set pressure unit (17) to the input pressure (Cv).

6. A load-controlled brake valve of compressed-air brakes of rail vehicles having a valve device (24) with a fold valve function according to any of the preceding claims.

## Revendications

1. Dispositif (24) de soupape à fonction de soupape en coude pour des soupapes à freinage proportionnel à la charge de frein à air comprimé de véhicules ferroviaires, comprenant :
une soupape (3) d'entrée et une soupape (4) de sortie, pour l'entrée et/ou la sortie d'air comprimé, afin de former une pression (C) de sortie, qui se distingue d'une pression d'entrée par une caractéristique coudée, dans lequel la soupape (3) d'entrée et la soupape (4) de sortie sont tour à tour ouvertes dans un sens contraire ou toutes deux fermées dans une position de fermeture et
un piston (6) de division de la pression et un piston (7) de postfreinage, pour actionner la soupape (3) d'entrée et la soupape (4) de sortie ;
le piston (6) de division de la pression étant chargé dans le sens de l'ouverture de la soupape (3) d'entrée par la pression d'entrée et sur une surface opposée plus grande par la pression (C) de sortie et
le piston (7) de postfreinage s'appuyant dans le sens de l'ouverture de la soupape (3) d'entrée sur le piston (6) de division de la pression et étant chargé dans ce sens par la pression d'entrée et, sur une surface de piston opposée, par une force de pression ou de ressort limitée donnée à l'avance,
le dispositif (24) de soupape ayant une position (20) de changement pour faire passer la fonction de soupape en coude d'un état enclenché à un état désenclenché et inversement,
**caractérisé en ce que**
le dispositif (20) de changement est constitué pour changer la fonction de soupape en coude pour un actionnement direct ou/et indirect de la soupape (3) d'entrée.

2. Dispositif (24) de soupape suivant la revendication 1, **caractérisé en ce que** le dispositif (20) de changement provoque, dans l'état désenclenché de la fonction de soupape en coude, une position ouverte de la soupape (3) d'entrée, et dans l'état enclenché de la fonction de soupape en coude, la possibilité d'origine de fonctionnement de la soupape (3) d'entrée est conservée.

3. Silencieux suivant la revendication 2, **caractérisé en ce que** le dispositif (20) de changement est constitué pour, à l'état désenclenché de la fonction de soupape en coude, supprimer la force de pression ou la force de ressort limitée donnée ,à l'avance sur le piston (7) de post freinage.

4. Silencieux suivant la revendication 3, **caractérisé en ce que** le dispositif (20) de changement relie, dans l'état désenclenché de la fonction de soupape en coude, un espace (13) de pression donné à l'avance, dans lequel le piston (7) de postfreinage est mobile, à l'atmosphère (19) ambiante et bloque une pression donnée à l'avance de l'espace (13) où la pression est donnée à l'avance et **en ce que** le dispositif (20) de changement relie, dans l'état enclenché de la fonction en coude, l'espace (13) de pression donné à l'avance à la pression donnée à l'avance.

5. Silencieux suivant la revendication 4, **caractérisé en ce que** le dispositif (20) de changement relie à l'atmosphère (19) ambiante, à l'état désenclenché de la fonction de soupape en coude, une unité (17) de pression donnée à l'avance, qui produit une pression (Cvs) donnée à l'avance pour l'espace (13) de pression donnée à l'avance, dans lequel le piston (7) de postfreinage est mobile et bloque une pression (Cv) d'entrée pour l'unité (17) de pression donnée à l'avance et **en ce que** le dispositif (20) de changement relie, à l'état enclenché de la fonction de soupape en coude, l'unité (17) de pression donnée à l'avance à la pression (Cv) d'entrée.

6. Soupape de frein proportionnel à la charge de frein à air comprimé de véhicule ferroviaire, comprenant un dispositif (24) de soupape à fonction de soupape en coude suivant l'une des revendications précédentes.
